# FASCICULE DE BREVET EUROPEEN

(11) **EP 4 272 538 B1**
(45) Date de publication et mention de la délivrance du brevet: **27.11.2024**
(21) Numéro de dépôt: 23170934.6
(22) Date de dépôt: 02.05.2023
(51) Int. Cl.: A01D 78/10

(54) **MACHINE DE FENAISON SÉCURISÉE ET PROTOCOLE S'Y RAPPORTANT**
GESICHERTE HEUWERBUNGSMASCHINE UND METHODE DAZU
SECURED HAYMAKING MACHINE AND RELATED PROCESS

(30) Priorité: 03.05.2022 FR 2204192
(43) Date de publication de la demande: 08.11.2023
(73) Titulaire: Kuhn SAS, 67700 Saverne (FR)
(72) Inventeur: SPEICH, Cédric, 67270 ALTECKENDORF (FR)
(74) Mandataire: Hager, Esther Evelyne

(56) Documents cités:
- EP-A1- 0 779 022
- EP-A1- 0 950 347
- EP-A1- 1 060 651
- US-A- 3 645 077

## Description

La présente invention concerne le domaine du machinisme agricole et notamment les machines agricoles de fenaison.

L'invention porte plus spécifiquement sur une machine agricole trainée équipée de deux rotors dotés de doigts pouvant ratisser un produit gisant au sol tel que de l'herbe coupée, chaque rotor roulant sur le sol par le biais d'un train roulant respectif, la machine étant également équipée d'un timon pouvant être lié à un tracteur par un dispositif d'accouplement, d'une poutre avant montée pivotante avec le timon selon un axe avant orienté horizontalement et sur laquelle est monté un rotor avant, et d'une poutre arrière montée pivotante avec la poutre avant selon un premier axe orienté verticalement et selon un deuxième axe orienté horizontalement et sur laquelle est monté un rotor arrière, la machine pouvant occuper une configuration travail dans laquelle la poutre arrière est proche du sol et une configuration manoeuvre dans laquelle la poutre arrière est plus éloignée du sol.

Une machine agricole du type évoqué ci-dessus est connu du document EP1076482A1. Sur la machine de ce document, lorsque la machine effectue un virage serré, notamment lors de demi-tours en bout de champ dans la configuration manoeuvre, l'inertie du rotor arrière peut engendrer un effort de poussée sur la poutre avant orienté longitudinalement à la poutre arrière. Cet effort de poussée, étant alors orienté transversalement à la poutre avant, peut entraîner les roues du rotor avant à riper ou glisser sur le sol, engendrant des contraintes dans la machine, notamment au niveau du train de roues avant. Ce glissement ou ripage peut également impliquer la détérioration du tapis végétal du sol, voire le basculement de la machine, pouvant entraîner des dégâts sur cette dernière. Du fait que le centre de gravité du rotor avant est déplacé vers le haut dans la configuration manoeuvre, le risque de basculement est accentué dans cette configuration.

Sur la machine du document EP1145620A1, le premier axe est situé sensiblement à mi-chemin entre l'axe de rotation du rotor avant et le dispositif d'accouplement. Un tel agencement permet de répartir l'effort de poussée dû à l'inertie du rotor arrière, entre le dispositif d'accouplement et le rotor avant. De cette manière, l'effort de poussée du rotor arrière est moindre au niveau du rotor avant, permettant également de diminuer le risque de ripage du rotor avant lors de virages serrés. Un inconvénient de cet agencement est cependant que la poutre arrière est allongée, impliquant une diminution du recouvrement des trajectoires des rotors lors de virages serrés en configuration travail, et pouvant amener à ce que, sur certaines zones, le produit gisant au sol ne soit pas ratissé.

Le document EP 0 779 022 A1 divulgue une machine agricole ayant une configuration travail et une configuration manoeuvre, dans laquelle une poutre arrière est plus éloignée du sol.

La présente invention a pour but de diminuer voire de supprimer les inconvénients précités, préférentiellement de manière simple et peu onéreuse, et sans augmenter le risque de ne pas ratisser certaines zones lors de virages serrés.

A cet effet, une importante caractéristique de l'invention consiste en ce qu'un actionneur central, articulé avec la poutre avant d'une part et avec la poutre arrière d'autre part, permet d'exercer un effort vers le bas sur le train roulant du rotor avant.

Cet agencement permet d'exercer une force dirigée vers le bas sur le rotor avant en configuration manoeuvre de sorte à augmenter la stabilité du rotor avant. Les roues du train de roues avant risquent ainsi moins de riper sur le sol dans le cas de virages serrés en configuration manoeuvre.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue de dessus d'une machine agricole selon l'invention en configuration travail.
[Fig. 2] est une vue en élévation latérale de la machine de la figure 1.
[Fig. 3] est une vue simplifiée en élévation latérale d'une machine agricole selon l'invention en configuration manoeuvre.
[Fig. 4] est une vue simplifiée de dessus d'une machine agricole selon l'invention en configuration manoeuvre ou travail.
[Fig. 5] est une vue de dessus, d'une machine agricole selon l'invention en configuration transport.
[Fig. 6] représente symboliquement un circuit hydraulique de manoeuvre possible de la machine selon l'invention.

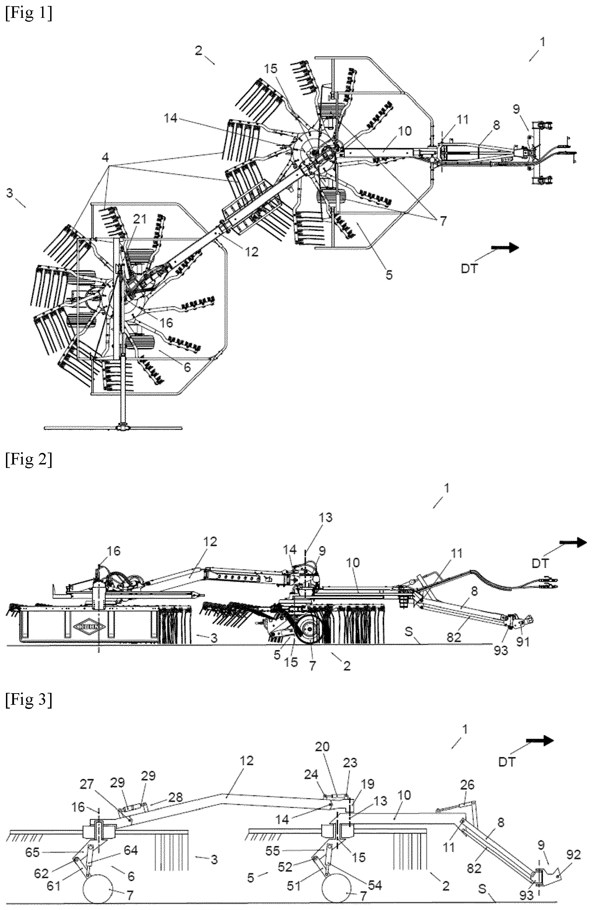

Telle que représenté sur les figures 1 à 5, la machine (1) agricole trainée est équipée :
- d'un rotor avant (2) et d'un rotor arrière (3), chaque rotor (2, 3) étant doté de doigts (4) pouvant ratisser un produit gisant au sol (S) tel que de l'herbe coupée, chaque rotor (2, 3) roulant sur le sol (S) par le biais d'un train roulant (5, 6) respectif,
- d'un timon (8) pouvant être lié à un tracteur par un dispositif d'accouplement (9),
- d'une poutre avant (10) montée pivotante avec le timon (8) selon un axe avant (11) orienté horizontalement, et sur laquelle est monté le rotor avant (2),
- d'une poutre arrière (12) montée pivotante avec la poutre avant (10) selon un premier axe (13) orienté verticalement et selon un deuxième axe (14) orienté horizontalement, sur la poutre arrière (12) étant monté le rotor arrière (3).

La machine (1) peut occuper une configuration travail dans laquelle la poutre arrière (12) est proche du sol (S) et une configuration manoeuvre dans laquelle la poutre arrière (12) est plus éloignée du sol (S)..

Selon une caractéristique intéressante de l'invention, un actionneur central (20), articulé avec la poutre avant (10) d'une part et avec la poutre arrière (12) d'autre part, permet d'exercer un effort vers le bas sur le train roulant (5) du rotor avant (2). L'actionneur central (20) permet ainsi de conférer au rotor avant (2) une plus grande stabilité. Grâce à cette disposition, lors d'un virage, l'effort de poussée sur la poutre avant (10) appliqué par la poutre arrière (12) du fait de son inertie, doit être plus important pour faire glisser le train roulant (5) du rotor avant (2) sur le sol (S), réduisant l'apparition de contraintes au niveau de ce train roulant (5) du rotor avant (2), ainsi que le risque de détérioration du tapis végétal du sol (S). Cette meilleure stabilité réduit également le risque de basculement de la machine (1), réduisant par là le risque d'endommagements. Du fait que l'actionneur central (20) est articulé avec la poutre arrière (12), lorsqu'il exerce un effort vers le bas sur le train roulant (5) du rotor avant (2), il exerce également un effort vers le haut sur la poutre arrière (12), et par conséquent sur le train roulant (6) du rotor arrière (3). L'actionneur central (20) déleste ainsi également le rotor arrière (3), de sorte que l'effort de poussée de la poutre arrière (12) dû à son inertie est moindre, impliquant également une diminution du risque de ripage du train roulant (5) du rotor avant (2). Grâce à l'articulation de la poutres avant (10) par rapport à la poutre arrière (12) selon les premier axe (13) et deuxième axe (14), la machine (1) est capable de s'adapter aux dénivellations d'un sol (S) irrégulier.

De préférence, l'actionneur central (20) comporte un vérin central (18). Dans le mode de réalisation préféré, l'actionneur central (20) est réalisé par le vérin central (18). Le fait que l'actionneur central (20) soit articulé avec la poutre avant (10) d'une part, signifie que la poutre avant (10) est reliée soit avec la tige, soit avec le corps du vérin central (18). Le fait que l'actionneur central (20) soit articulé avec la poutre arrière (12) d'autre part, signifie que la poutre arrière (12) est reliée à celui de la tige ou du corps du vérin central (18) qui n'est pas relié(e) avec la poutre avant (20). De préférence, le vérin central (18) est hydraulique et linéaire. Le montage d'un tel vérin central (18) est avantageusement simple à mettre en oeuvre et peu onéreux.

La machine (1) peut être déplacée dans une direction de travail (DT), préférentiellement par un tracteur. La machine (1) agricole selon l'invention est préférentiellement un andaineur. Un andaineur permet de déplacer le produit transversalement à la direction de travail (DT) afin de le déposer en un andain parallèle à la direction de travail (DT). Le produit est un végétal coupé, tel que de l'herbe. Le produit pourrait également être de la paille. La machine (1) peut être liée à un tracteur au moyen du dispositif d'accouplement (9). La machine (1) est optimisée pour être déplacée sur un sol (S) plan et horizontal. La direction de travail (DT) est préférentiellement horizontale. Evidemment, la machine (1) peut se trouver sur un sol (S) accidenté et/ou incliné. Les orientations verticales et horizontales sont à considérer lorsque la machine (1) et le tracteur sont sur un sol (S) plan et horizontal.

Le circuit hydraulique du tracteur (31) comporte un pompe (P) et un réservoir (T). Afin de commander la machine (1), respectivement de relier la pompe (P) ou le réservoir (T) à la machine (1), et notamment à un circuit hydraulique de manoeuvre (30), le tracteur (31) dispose d'au moins un distributeur hydraulique (32). Le circuit hydraulique du tracteur (31), respectivement la pompe (P), est apte à fournir de l'huile à une pression tracteur définie. La pression tracteur est préférentiellement comprise entre 150 et 250 bars, et préférentiellement entre 175 et 225 bars. D'ordinaire, la pression tracteur est aux alentours de 200 bars.

Lors de l'utilisation de la machine (1), chaque rotor (2, 3) est entrainé en rotation autour d'un axe de rotation (15, 16) respectif. Les rotors (2, 3) sont préférentiellement entraînés en rotation via des arbres télescopiques reliés à la prise de force du tracteur auquel la machine (1) est liée. Les rotors (2, 3) peuvent également être entraînés en rotation via un ou plusieurs moteur(s), notamment hydraulique(s).

Chacun des rotors avant (2) et arrière (3) est guidé en rotation autour de son axe de rotation (15, 16) respectif, respectivement par rapport à la poutre avant (10) et arrière (12), par exemple au moyen de roulements à billes. Les axes de rotation (15, 16) des rotors (2, 3) sont sensiblement verticaux en configuration travail. De manière à simplifier la machine (1), les axes de rotation (15, 16) sont également sensiblement verticaux en configurations manoeuvre et transport.

Selon une variante de réalisation simple non représentée, le dispositif d'accouplement (9) peut être simplement réalisé par un anneau et une broche traversant cet anneau et maintenue fixe avec le tracteur autorisant un pivotement de la machine (1) par rapport au tracteur suivant un axe vertical, permettant de suivre la trajectoire du tracteur. En outre, l'anneau étant placé entre deux flancs d'une chappe avec un certain jeu, la machine (1), respectivement le timon (8), dispose d'une petite liberté de pivotement par rapport au tracteur autour d'un axe horizontal passant par la broche, compensant une potentielle différence de hauteur entre la machine (1) et le tracteur.

Dans le mode de réalisation préféré, le dispositif d'accouplement (9) comporte une barre transversale (91) disposant de deux tourillons (92). Chaque tourillon (92) est destiné à être accroché à un bras de levage inférieur respectif du tracteur. Une telle réalisation du dispositif d'accouplement (9) permet d'éviter des contraintes dans la broche verticale fixée au tracteur et de permettre une plus grande plage de pivotement du timon par rapport au tracteur suivant un axe horizontal. Dans le cas d'un dispositif d'accouplement (9) avec barre transversale (91), cet axe horizontal passe par les deux tourillons (92). La droite passant par les tourillons (92) est horizontale. La droite passant par les tourillons (92) est en outre orthogonale à la direction de travail (DT). Dans le mode de réalisation préféré, la barre transversale (91) est articulée avec une pièce d'adaptation (93) suivant un axe sensiblement vertical, autorisant une orientation libre de la machine (1) (hormis la barre transversale (91)) lors de virages, et permettant de suivre la trajectoire du tracteur. La verticale est orthogonale à la direction de travail (DT) et à la droite passant par les tourillons (92).

Une tringle (82) est articulée d'une part sur le dispositif d'accouplement (9), respectivement sur la pièce d'adaptation (93), et d'autre part sur la poutre avant (10) selon des axes parallèles à l'axe avant (11) de manière à former un quadrilatère déformable avec le timon (8). Ce quadrilatère déformable est préférentiellement un parallélogramme déformable. Il permet de conserver l'orientation de la poutre avant (10), respectivement de l'axe de rotation (15) du rotor avant (2), quel que soit l'angle entre le timon (8) et la poutre avant (10) en vue latérale. De préférence, la poutre avant (10) est sensiblement horizontale. De préférence, l'axe de rotation (15) du rotor avant (2) est sensiblement vertical.

Chacun des rotors avant (2) et arrière (3) comporte plusieurs bras (17) qui s'étendent radialement par rapport à l'axe de rotation (15, 16) respectif. Les bras (17) d'un rotor (2, 3) sont situés dans un plan horizontal. A l'extrémité extérieure de chaque bras (17) sont fixés les doigts (4) permettant de ratisser le produit gisant au sol (S). Chaque bras (17) est préférentiellement monté pivotant sur lui-même afin de moins ratisser le sol (S) et de ménager le tapis végétal. A cet effet, chaque bras (17) est guidé en rotation autour de son axe géométrique longitudinal, par exemple avec une bague de roulement. Chaque bras (17) est équipé à son extrémité proche de l'axe de rotation (15, 16) respectif, d'un galet roulant sur une came fixe par rapport au train roulant (5, 6) respectif, permettant de commander l'orientation des doigts (4) au cours de la rotation du rotor (2, 3) respectif. Les doigts (4) ratissent ainsi le sol (S) préférentiellement uniquement sur l'avant des rotors (2, 3), permettant de déplacer le produit transversalement à la direction de travail (DT). Les doigts (4) sont préférentiellement orientés verticalement à l'avant des rotors (2, 3), et allongés à l'arrière de ceux-ci.

Chaque rotor (2, 3) prend appui au sol (S) grâce à son train roulant (5, 6) respectif. Chaque train roulant (5, 6) comporte des roues (7) roulant sur le sol (S). Chaque train roulant (5, 6) peut comporter au moins deux roues (7). En vue d'une meilleure stabilité, chaque train roulant (5,6) peut également comporter quatre roues (7).

Chaque train roulant (5, 6) comporte également un support (55, 65) sur lequel est monté pivotant le rotor (2, 3) respectif autour de l'axe de rotation (15, 16) respectif. Chaque train roulant (5, 6) comporte également une jambe (51, 61) reliant les roues (7) au support (55, 65) respectif. Chaque jambe (51, 61) est montée pivotante avec le support (55, 65) respectif autour d'un axe de jambe (52, 62) respectif sensiblement horizontal. Chaque train roulant (5, 6) comprend aussi un vérin de soulèvement (54, 64) destiné à faire pivoter la jambe (51, 61) autour de l'axe de jambe (52, 62) respectif par rapport au support (55, 65) respectif. Dans le mode de réalisation préféré, chaque vérin de soulèvement (54, 64) est relié d'une part à la jambe (51, 61) respective, et d'autre part au support (55, 65) respectif. Il ressort de ce qui précède que la distance entre chacun des rotors (2, 3) et le sol (S) peut être réglée, préférentiellement grâce à un vérin de soulèvement (54, 64) respectif. Surtout, les vérins de soulèvement (54, 64) sont actionnés lors de la transposition de la machine (1) entre la configuration travail et la configuration manoeuvre.

Dans un mode de réalisation alternatif non représenté, l'actionneur central (20) comporte un ressort agencé de manière à exercer un effort vers le bas sur le train roulant (5) du rotor avant (2). Le ressort pourrait notamment être un ressort de traction agencé au-dessus du deuxième axe (14). Pour exercer un effort vers le bas sur le train roulant (5) avant (2), il est alors nécessaire de tendre le ressort de traction, au moins en configuration manoeuvre. Un moyen de réaliser cette tension est de relier ce ressort à un vérin. Ainsi, dans un mode de réalisation non représenté, l'actionneur de manoeuvre comporte un ressort et le vérin central (18). Une telle réalisation complexifierait cependant la machine (1) par rapport au mode de réalisation préféré.

Un autre moyen de tendre le ressort de l'actionneur central (20), le cas échéant, est de le faire lors de la fabrication de la machine (1). Dans ce cas, l'actionneur central (20), respectivement son ressort, exerce un effort vers le bas sur le train roulant (5) du rotor avant (2) en permanence. Autrement dit, l'actionneur central (20), respectivement son ressort, exerce alors un effort vers le bas sur le train roulant (5) du rotor avant (2) également en configuration travail, ce qui implique un risque plus important de détérioration du tapis végétal du sol (S) par les doigts (4) et les roues (7) du train roulant (5) du rotor avant (2).

L'actionneur central (20) est ainsi agencé de manière à exercer un effort vers le bas sur le train roulant (5) du rotor avant (2) au moins dans la configuration manoeuvre. Dans le mode de réalisation préféré, le vérin central (18) est préférentiellement agencé pour exercer un effort vers le bas sur le train roulant (5) du rotor avant (2) uniquement dans la configuration manoeuvre. La poutre arrière (12) étant plus éloignée du sol (S) en configuration manoeuvre, le risque de basculement de la machine (1) est plus important. A cela s'ajoute le fait qu'il est plus fréquent de faire des virages serrés en configuration manoeuvre, particulièrement lors de demi-tours en bout de champs, augmentant le risque de basculement dans cette configuration. Le fait d'exercer un effort vers le bas sur le train roulant (5) du rotor avant (2) dans cette configuration réduit ainsi le risque de basculement pour les cas les plus fréquents.

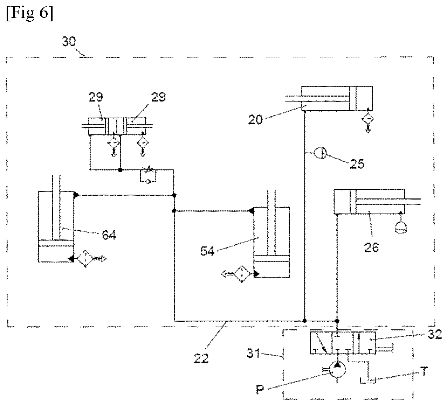

En vue de simplifier le circuit hydraulique de manoeuvre (30), dans le mode de réalisation préféré illustré sur la figure 6, les vérins de soulèvement (54, 64) sont hydrauliquement reliés par une conduite hydraulique commune (22) qui est également reliée au vérin central (18). De cette manière, un unique distributeur hydraulique (32) peut actionner le vérin central (18) et les vérins de soulèvement (54, 64), simplifiant l'utilisation de la machine (1), et simplifiant sa transposition entre les configurations travail et manoeuvre. En effet, une manipulation du distributeur hydraulique (32) relié au circuit hydraulique de manoeuvre (30) permet de transposer la machine (1) entre les configurations travail et manoeuvre.

En configuration travail, la conduite hydraulique commune (22) est reliée à un ou au réservoir (T). Il ressort de ce qui précède qu'en configuration de travail, le vérin central (18) est hydrauliquement relié à un ou au réservoir (T), autorisant le pivotement de la poutre arrière (12) par rapport à la poutre avant (10) autour du deuxième axe (14)en fonction des irrégularités du sol (S), améliorant ainsi la qualité de travail de la machine (1) et diminuant le risque de détérioration du tapis végétal. En configuration manoeuvre et configuration transport, la conduite hydraulique commune (22) est reliée à une ou la pompe (P), actionnant les vérins (18, 26, 29, 54, 64) du circuit hydraulique de manoeuvre (30).

Lors de son utilisation, la machine (1) est en configuration de travail (figures 1 et 2). Dans cette configuration, les rotors (2, 3) sont proches du sol (S) de manière à pouvoir ratisser le produit. En vue selon le premier axe (13), la poutre arrière (12) forme avec la poutre avant (10) un angle (A) entre poutres (10, 12). En configuration travail, l' angle (A) entre poutres (10, 12) est compris entre 15° et 60° en vue de dessus, permettant d'augmenter la largeur de travail de la machine (1). L'angle (A) entre poutres (10, 12) est même compris entre 30° et 50° en configuration travail, et préférentiellement également en configuration manoeuvre.

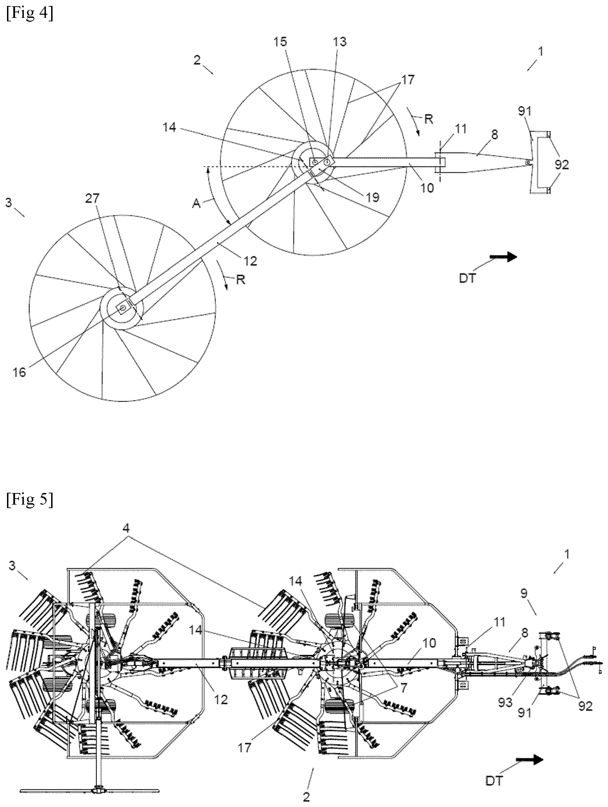

Lorsque la machine (1) occupe la configuration travail (figures 1 et 4), l'angle (A) entre poutres (10, 12) est tel que les deux rotors (2, 3) ne forment qu'un seul andain. Préférentiellement, la machine (1) peut occuper une autre configuration travail (non représentée) dans laquelle l'angle (A) entre poutres (10, 12) est tel que chaque rotor (2, 3) forme un andain qui lui est propre. Dans cette autre configuration travail, l'angle (A) entre poutres (12, 13) est supérieur que dans la configuration travail (des figures 1 et 4). Le rotor avant (2) est situé devant le rotor arrière (3). Grâce au déplacement de la machine (1) suivant la direction de travail (DT), le rotor avant (2) déplace le produit devant le rotor arrière (3). Le rotor arrière (3) déplace à son tour le produit latéralement, respectivement transversalement à la direction de travail (DT). Dans la configuration de travail, les rotors avant (2) et arrière (3) sont préférentiellement entraînés dans le même sens de rotation (R), ainsi que représenté par des flèches sur la figure 4. Le rotor arrière (3) forme alors un andain du côté où il est déporté, préférentiellement du côté droit de la machine (1) en regardant dans la direction de travail (DT). Afin de calibrer l'andain, une plaque déflectrice peut être disposée latéralement à une certaine distance du rotor arrière (3).

Afin d'éviter de défaire des andains déjà formés et/ou de ne pas ratisser certains endroits, la machine (1) peut occuper une configuration manoeuvre (figure 3). Dans la configuration manoeuvre, les rotors (2, 3) sont plus éloignés du sol (S) qu'en configuration travail. Dans cette configuration, les poutres (10, 12) sont également plus éloignées du sol (S) qu'en configuration travail. Afin que la transposition entre configurations travail et manoeuvre soit la plus rapide possible, l'angle (A) entre poutres (10, 12) est identique entre configuration travail et configuration manoeuvre.

Afin de réduire sa largeur, la machine (1) peut également occuper une configuration transport dans laquelle le plan passant par les axes de rotation (15, 16) des rotors (2, 3) est sensiblement parallèle à la direction de travail (DT). Autrement dit, en configuration transport, l' angle (A) entre poutres (10, 12) est inférieur à 5° en vue de dessus, et préférentiellement sensiblement égal à 0°. Afin de réduire la largeur total du convoi composé du tracteur et de la machine (1), dans la configuration transport, le plan passant par les axes de rotation (15, 16) des rotors (2, 3) est confondu au plan médian du tracteur. De manière simple, dans la configuration transport, la poutre avant (10) est orienté parallèlement à la poutre arrière (12) et au timon (8) en vue de dessus. Dans la configuration transport, les rotors (2, 3) sont plus éloignés du sol (S) qu'en configuration travail. Dans cette configuration, les poutres (10, 12) sont également plus éloignées du sol (S) qu'en configuration travail.

Le support (65) du rotor arrière (3) est maintenu fixe en translation par rapport à la poutre arrière (12). De préférence, le support (65) du rotor arrière (3) est monté pivotant sur la poutre arrière (12), par exemple grâce à des roulements au niveau de son extrémité supérieure. La poutre arrière (12) s'étend au-dessus du rotor arrière (3). Dans le mode de réalisation préféré, un actionneur d'orientation (21) permet de faire pivoter le train roulant (6) du rotor arrière (3) autour de l'axe de rotation (16) du rotor arrière (3). Les roues (7) du train roulant (6) du rotor arrière (3) ne sont pas folles. Autrement dit, la rotation du train roulant (5, 6), respectivement des roues (7), est bloquée dans chacune des configurations de la machine (1). Afin de faire pivoter la poutre arrière (12) par rapport à la poutre avant (10) autour du premier axe (13), le train roulant (6) du rotor arrière (3) est pivoté autour de l'axe de rotation (16) du rotor arrière (3). De préférence, le pivotement du train roulant (6) autour de l'axe de rotation (16) du rotor arrière (3) est réalisé par l'actionneur d'orientation (21). Grâce au déplacement de la machine (1) suivant la direction de travail (DT), l'orientation des roues (7) du train roulant (6) du rotor arrière (3) engendre le pivotement de la poutre arrière (12) par rapport à la poutre avant (10) autour du premier axe (13). Autrement dit, le réglage de l'angle (A) entre poutres (10, 12) en vue suivant le premier axe (13) est réglé grâce à l'actionneur d'orientation (21). De préférence, l'actionneur d'orientation (21) est relié à un distributeur hydraulique qui lui est propre. De préférence, les transpositions entre configuration transport et configuration manoeuvre sont réalisées en faisant pivoter le train roulant (6) du rotor arrière (3) autour de l'axe de rotation (16) du rotor arrière (3).

Le support (55) du rotor avant (2) est maintenu fixe en translation par rapport à la poutre avant (10). En vue de simplifier la machine (1), le support (55) du rotor avant (2) est préférentiellement maintenue fixe en rotation par rapport à la poutre avant (10). La poutre avant (10) s'étend au-dessus du rotor avant (2). La poutre avant (10), respectivement sa dimension longitudinale, s'étend de préférence parallèlement à la direction de travail (DT) dans toutes les configurations de la machine (1), réduisant la largeur totale de la machine (1). La largeur de la machine (1) est sa dimension suivant la direction horizontale et perpendiculaire à la direction de travail (DT). La poutre avant (10), respectivement sa dimension longitudinale, s'étend aussi préférentiellement horizontalement.

Ainsi qu'il ressort de la figure 3, un vérin de timon (26) est également articulé d'une part avec le timon (8), et d'autre part avec la poutre avant (10). Ce vérin de timon (26) est agencé pour faire pivoter le timon (8) par rapport à la poutre avant (10) autour de l'axe avant (11). Le vérin de timon (26) est préférentiellement relié hydrauliquement à la conduite commune (22), réduisant ainsi le nombre de distributeur hydraulique nécessaire au fonctionnement de la machine (1).

De manière à autoriser une meilleure adaptation de la machine (1) aux irrégularités du sol (S), l'axe de rotation (16) du rotor arrière (3) peut avantageusement pivoter autour d'un axe arrière (27) parallèle au deuxième axe (14), réduisant le risque de détérioration du tapis végétal. A cet effet, la poutre arrière (12) comporte deux parties articulées entre elles autour de cet axe arrière (27). Afin de déterminer l'orientation de l'axe de rotation (16) du rotor arrière (3), dans la configuration manoeuvre, et préférentiellement également dans la configuration transport, un actionneur arrière (28) est articulé séparément à chacune des parties de la poutre arrière (12). Afin de maintenir les parties de la poutre arrière (12) suivant un angle défini en vue latérale, l'actionneur arrière (28) comporte deux vérins jumelés (29) dont les corps sont solidaires l'un de l'autre. Dans l'exemple des figures, les corps des deux vérins jumelés (29) sont soudés l'un à l'autre. Les vérins jumelés (29) sont préférentiellement reliés hydrauliquement à la conduite commune (22), réduisant ainsi le nombre de distributeur hydraulique nécessaire au fonctionnement de la machine (1).

La présente invention porte également sur un procédé de transposition de la machine (1) agricole trainée depuis la configuration travail vers la configuration manoeuvre, le procédé consistant à actionner les vérins de soulèvement (54, 64) de manière à soulever les rotor avant (2) et rotor arrière (3) et à actionner le vérin central (18) de manière à ce qu'il exerce un effort vers le bas sur le train roulant (5) du rotor avant (2), permettant de réduire le risque de glissement du train roulant (5) du rotor avant (2) sur le sol (S) lors de virages en configuration manoeuvre et de basculement de la machine (1). Selon le mode de réalisation préféré du procédé, ce procédé consiste à actionner les vérins de soulèvement (54, 64) de manière à soulever les rotor avant (2) et rotor arrière (3), et simultanément à actionner le vérin central (18) de manière à ce qu'il exerce un effort vers le bas sur le train roulant (5) du rotor avant (2), permettant une transposition rapide entre configuration travail et configuration manoeuvre.

Dans le mode de réalisation préféré, le procédé de transposition de la machine (1) entre configuration travail et configuration manoeuvre consiste à actionner simultanément les vérins de soulèvement (54, 64), le vérin central (18), les vérins jumelés (29) et le vérin de timon (26). De préférence, l'actionnement des vérins de soulèvement (54, 64), central (18), jumelés (29) et de timon (26) est effectué jusqu'à ce que la pression dans le circuit hydraulique de manoeuvre (30) soit égale à la pression tracteur, permettant ainsi d'atteindre une distance importante entre les rotors (2, 3) et le sol (S), tout en maintenant les axes de rotation (15, 16) verticaux. Il peut être souligné que la majorité des tracteurs actuels disposent d'une sécurité permettant de rediriger le flux d'huile d'un distributeur hydraulique (32) vers le réservoir (T) du tracteur lorsque la pression dans le circuit auquel est relié ce distributeur hydraulique (32) atteint la pression tracteur.

Ainsi qu'il ressort de la figure 6, les vérins de soulèvement (54, 64), le vérin central (18), et les vérins jumelés (29) sont préférentiellement simple effet, simplifiant le circuit hydraulique de manoeuvre (30). Chacun dispose ainsi d'une chambre relié à l'air, préférentiellement via un reniflard. En effet, grâce à la pesanteur, l'abaissement des rotors (2, 3) peut être réalisés en reliant la conduite commune (22) à un ou au réservoir (T).

Afin d'assurer l'orientation de l'axe de rotation (15) du rotor avant (2), le vérin de timon (26) peut avantageusement être double effet, une chambre du vérin de timon (26) étant préférentiellement reliée à la conduite commune (22) et l'autre chambre à un accumulateur hydropneumatique, simplifiant également le circuit hydraulique de manoeuvre (30).

Selon une variante de réalisation , l'actionneur central (20) est directement articulé d'une part sur la poutre avant (10) et d'autre part sur la poutre arrière (12). Dans ce cas, les articulations entre l'actionneur central (20) et chacune des poutre avant (10) et poutre arrière (12) doivent être réalisées par des articulations rotule ou des joints de cardan. Un inconvénient d'une telle réalisation est cependant qu'elle nécessite un allongement plus important de l'actionneur central (20), du fait que sa longueur est également modifiée par le pivotement de la poutre avant (10) par rapport à la poutre arrière (12) selon le premier axe (13). En outre, l'effort de l'actionneur central (20) sur le train roulant (5) du rotor avant (2) comporterait une composante orientée parallèlement au deuxième axe (14). Cette composante aurait alors tendance à faire pivoter la poutre arrière (12) par rapport à la poutre avant (10) autour du premier axe (13), ce qui provoquerait un pivotement des axes de roues (7) du train roulant (6) du rotor arrière (3). En effet, les axes des roues (7) du train roulant (6) du rotor arrière (3) pourraient alors ne plus être orthogonaux à la direction de travail (DT), induisant un glissement du train roulant (6) du rotor arrière (3) sur le sol (S), pouvant provoquer des dégâts sur la machine (1) et détériorer le tapis végétal du sol (S).

Dans le mode de réalisation préféré, afin de simplifier la cinématique de la machine (1) sans la fragiliser, un carter central (19) est articulé avec la poutre avant (10) selon le premier axe (13) et avec la poutre arrière (12) selon le deuxième axe (14). De manière alternative, le carter central (19) pourrait être articulé avec la poutre avant (10) selon le deuxième axe (14) et avec la poutre arrière (12) selon le premier axe (13). Il ressort de ce qui précède qu'un carter central (19) relie la poutre avant (10) et la poutre arrière (12), le carter central (19) étant articulé avec la poutre avant (10) selon l'un entre le premier axe (13) et le deuxième axe (14) et avec la poutre arrière (12) selon l'autre (entre le premier axe (13) et le deuxième axe (14)). Préférentiellement, le carter central (19) est articulé sur la poutre avant (10) selon l'un entre le premier axe (13) et le deuxième axe (14) et sur la poutre arrière (12) selon l'autre entre le premier axe (13) et le deuxième axe (14). Dire que le carter central (19) est articulé sur la poutre avant (10) selon le premier axe (13) revient à dire qu'il est directement articulé sur la poutre avant (10), sans pièce intermédiaire.

Tel qu'il ressort de la figure 2 notamment, l'actionneur central (20), respectivement le vérin central (18), est articulé avec le carter central (19) suivant un troisième axe (23) et avec la poutre arrière (12) suivant un quatrième axe (24). Le troisième axe (23) et le quatrième axe (24) sont sensiblement parallèles à le deuxième axe (14). Afin que l'actionneur central (20) n'empêche pas le pivotement entre la poutre arrière (12) et la poutre avant (10) suivant le premier axe (13), l'actionneur central (20) est articulé avec le carter central (19) suivant le troisième axe (23) et avec l'un entre la poutre avant (10) et la poutre arrière (12) suivant le quatrième axe (24). Une telle réalisation présente l'avantage d'être simple à mettre en oeuvre. De préférence, l'actionneur central (20) est articulé sur le carter central (19) suivant le troisième axe (23) et sur la poutre arrière (12) suivant le quatrième axe (24).

Dans une variante de réalisation alternative non représentée, le vérin central (18) est situé sous le deuxième axe (14) et actionné en allongement. Il ressort cependant de la figure 2 notamment que l'espace entre le carter central (19) et le rotor avant (2) et/ou l'espace entre le carter central (19) et la poutre avant (10) est restreint, ce, davantage encore lorsque le rotor arrière (3) se situe plus bas que le rotor avant (2). Ainsi, dans le mode de réalisation préféré, le vérin central (18) est situé plus haut que le deuxième axe (14). Le vérin central (18) est alors actionné en rétractation afin d'exercer un effort vers le bas sur le train roulant (5) du rotor avant (2). Afin que le train roulant (6) du rotor arrière (3) reste en contact avec le sol (S), le vérin central (18) est de préférence agencé et/ou dimensionné de sorte à ne pas avoir la capacité de soulever le rotor arrière (3) et la poutre arrière (12).

Dans le mode de réalisation préféré, le vérin central (18) est hydrauliquement relié à la conduite commune (22). Ainsi qu'il ressort de la figure 6, un accumulateur hydropneumatique (25) est également hydrauliquement relié à la conduite commune (22), permettant à la poutre arrière (12) de pivoter par rapport à la poutre avant (10) autour du deuxième axe (14) en configuration manoeuvre. En effet, de l'huile pouvant s'écouler entre l'accumulateur hydropneumatique (25) et le vérin central (18), le pivotement entre les poutres avant (10) et arrière (12) autour du deuxième axe (14) est autorisé, améliorant la capacité d'adaptation de la machine (1) aux irrégularités du sol (S) en configuration manoeuvre, et de préférence également en configuration transport. En outre, l'accumulateur hydropneumatique (25) permet que l'effort orienté vers le bas et exercé par le vérin central (18) sur la poutre avant (10) soit sensiblement constant quel que soit l'angle formé par les poutres avant (10) et arrière (12) en vue latérale.

Dans une variante de réalisation non représentée, le vérin central (18) et l'accumulateur hydropneumatique (25) sont reliés à un distributeur hydraulique (32) qui leur est propre, évitant de perturber l'actionnement des vérins de soulèvement (54, 64) en configuration manoeuvre de la machine (1).

Lorsque la machine (1) est déplacée en ligne droite en configuration travail (des figures 1 et 4), l'angle (A) entre poutres (10, 12) est tel qu'un recouvrement des trajectoires des rotors (2, 3) permet de ratisser le produit sur une largeur de travail ininterrompue. La rotation entre poutres (10, 12) autour du premier axe (13) est autorisée dans toutes les configurations afin de permettre au rotor arrière (3) de mieux suivre la trajectoire du tracteur lors de virages, évitant de travailler deux fois au même endroit et potentiellement de détériorer le tapis végétal. Ainsi, il peut arriver, lorsque le tracteur effectue un virage dans la configuration travail, que la poutre arrière (12) pivote tellement autour du premier axe (13) par rapport à la poutre avant (10) que du produit ne soit pas ratissé sur certaines zones dans le sillage de la machine (1), impactant négativement la qualité de travail de la machine (1).

Un moyen d'éviter ou de réduire ce phénomène est de réduire la distance entre dispositif d'accouplement (9) et le premier axe (13). En effet, plus le premier axe (13) est proche du dispositif d'accouplement (9), plus l'effort de poussée dû à l'inertie du rotor arrière (3) lors de virage est absorbé par le dispositif d'accouplement (9), et, par conséquent, moins la composante de l'effort de poussée supportée par le rotor avant (2) et transmis au train roulant (5) du rotor avant (2), est importante. Ainsi, le risque de glissement du train roulant (5) du rotor avant (2) est moindre lors de virages en configuration manoeuvre. Ce faisant, la poutre arrière (12) est cependant plus longue, impliquant une diminution plus rapide du recouvrement lors de virages et augmentant par conséquent le risque pour la machine (1) de laisser, après son passage, des zones non ratissées en virage. Ainsi, en vue de permettre une bonne qualité de travail même lors de virages, le premier axe (13) est à une distance de l'axe de rotation (15) du rotor avant (2) inférieure au quart du diamètre du rotor avant (2). Plus préférentiellement, le premier axe (13) est éloigné de l'axe de rotation (15) du rotor avant (2) d'une distance inférieure au septième du diamètre extérieur du rotor avant (2). Le premier axe (13) est même plus préférentiellement éloigné de l'axe de rotation (15) du rotor avant (2) d'une distance inférieure au dixième du diamètre extérieur du rotor avant (2).

Dans une variante de réalisation non représentée, l'axe de rotation (15) du rotor avant (2) est confondu avec le premier axe (13). Une telle réalisation complique cependant la mise en oeuvre de la machine (1).

Alternativement ou additionnellement, un système de compensation permet de faire varier l'effort appliqué par l'actionneur central (20) sur le train roulant (5) du rotor avant (2) en fonction de la valeur de l'angle (A) entre poutres (10, 12). Le système de compensation peut comprendre un capteur permettant de déterminer l'angle (A) entre poutres (10, 12) et d'envoyer un signal électrique à une électrovanne située sur la conduite reliant le vérin central (18) au circuit hydraulique du tracteur (31), respectivement à la pompe (P).

## Revendications

1. Machine (1) agricole trainée équipée d'un rotor avant (2) et d'un rotor arrière (3), chaque rotor (2, 3) étant doté de doigts (4) pouvant ratisser un produit gisant au sol (S) tel que de l'herbe coupée, chaque rotor (2, 3) roulant sur le sol (S) par le biais d'un train roulant (5, 6) respectif, la machine (1) étant également équipée d'un timon (8) pouvant être lié à un tracteur par un dispositif d'accouplement (9), d'une poutre avant (10) montée pivotante avec le timon (8) selon un axe avant (11) orienté horizontalement, et sur laquelle est monté le rotor avant (2), d'une poutre arrière (12) montée pivotante avec la poutre avant (10) selon un premier axe (13) orienté verticalement et selon un deuxième axe (14) orienté horizontalement, sur la poutre arrière (12) étant monté le rotor arrière (3), la machine (1) pouvant occuper une configuration travail dans laquelle la poutre arrière (12) est proche du sol (S), et une configuration manoeuvre dans laquelle la poutre arrière (12) est plus éloignée du sol (S), machine (1) **caractérisée en ce qu'**un actionneur central (20), articulé avec la poutre avant (10) d'une part et avec la poutre arrière (12) d'autre part, permet d'exercer un effort vers le bas sur le train roulant (5) du rotor avant (2).

2. Machine selon la revendication 1, **caractérisée en ce que** l'actionneur central (20) est réalisé par un vérin central (18) et **en ce que** le vérin central (18) est agencé pour exercer un effort vers le bas sur le train roulant (5) du rotor avant (2) uniquement dans la configuration manoeuvre.

3. Machine selon la revendication 2, **caractérisée en ce qu'**en configuration travail, le vérin central (18) est hydrauliquement relié à un réservoir (T).

4. Machine selon l'une quelconque des revendications 1 à 3, **caractérisée en ce qu'**un carter central (19) relie la poutre avant (10) et la poutre arrière (12), le carter central (19) étant articulé avec la poutre avant (10) selon l'un entre le premier axe (13) et le deuxième axe (14) et avec la poutre arrière (12) selon l'autre.

5. Machine de fenaison selon l'une quelconque des revendications 1 à 4, **caractérisée en ce que** le vérin central (18) est situé plus haut que le deuxième axe (14), et **en ce que** le vérin central (18) est actionné en rétractation afin d'exercer un effort vers le bas sur le train roulant (5) du rotor avant (2).

6. Machine de fenaison selon l'une quelconque des revendications 1 à 5, **caractérisée en ce que** la distance entre chacun des rotors (2, 3) et le sol (S) peut être réglée grâce à un vérin de soulèvement (54, 64) respectif, et **en ce que** les vérins de soulèvement (54, 64) sont hydrauliquement reliés par une conduite hydraulique commune (22) qui est également reliée au vérin central (18).

7. Machine de fenaison selon la revendication 6, **caractérisée en ce qu'**un accumulateur hydropneumatique (25) est hydrauliquement relié à la conduite commune (22).

8. Machine de fenaison selon l'une quelconque des revendications 1 à 7, **caractérisée en ce que** le premier axe (13) est à une distance de l'axe de rotation (15) du rotor avant (2) inférieure au quart du diamètre extérieur du rotor avant (2).

9. Procédé de transposition d'une machine (1) agricole trainée depuis une configuration travail vers une configuration manoeuvre, la machine (1) étant équipée d'un rotor avant (2) et d'un rotor arrière (3), chaque rotor (2, 3) étant doté de doigts (4) pouvant ratisser un produit gisant au sol (S) tel que de l'herbe coupée, chaque rotor (2, 3) roulant sur le sol (S) par le biais d'un train roulant (5, 6) respectif, la machine (1) étant également équipée d'un timon (8) pouvant être lié à un tracteur par un dispositif d'accouplement (9), d'une poutre avant (10) montée pivotante avec le timon (8) selon un axe avant (11) orienté horizontalement, et sur laquelle est monté le rotor avant (2), d'une poutre arrière (12) montée pivotante avec la poutre avant (10) selon un premier axe (13) orienté verticalement et selon un deuxième axe (14) orienté horizontalement, sur la poutre arrière (12) étant monté le rotor arrière (3), la machine (1) pouvant occuper une configuration travail dans laquelle la poutre arrière (12) est proche du sol (S), et une configuration manoeuvre dans laquelle la poutre arrière (12) est plus éloignée du sol (S), , procédé **caractérisé en ce qu'**il consiste à actionner des vérins de soulèvement (54, 64) de manière à soulever les rotor avant (2) et rotor arrière (3) et à actionner un vérin central (18) articulé avec la poutre avant (10) d'une part et avec la poutre arrière (12) d'autre part, de manière à ce qu'il exerce un effort vers le bas sur le train roulant (5) du rotor avant (2).

10. Procédé selon la revendication 9, **caractérisé en ce qu'**il consiste à actionner les vérins de soulèvement (54, 64) de manière à soulever les rotor avant (2) et rotor arrière (3), et simultanément à actionner le vérin central (18) de manière à ce qu'il exerce un effort vers le bas sur le train roulant (5) du rotor avant (2).

## Patentansprüche

1. Gezogene Landwirtschaftsmaschine (1) mit einem Frontrotor (2) und einem Heckrotor (3), wobei jeder Rotor (2, 3) mit Finger (4) versehen ist, die ein auf dem Boden (S) liegendes Produkt, wie gemähtes Grass, rechen können, wobeil jeder Rotor (2, 3) über den Boden (S) mittels eines jeweiligen Fahrwerks (5, 6) rollt, wobei die Maschine (1) ebenfalls eine Deichsel (8) aufweist, die mittels einer Kupplungsvorrichtung (9) an einen Schlepper angekuppelt werden kann, einen Vorderbalken (10) der drehbar entlang einer horizontal ausgerichteten Frontachse (11) mit der Deichsel (8) montiert ist, und an welchem der Frontrotor (2) angebracht ist, ein Hinterbalken (12), der drehbar entlang einer ersten vertikal ausgerichteten Achse (13) und einer zweiten horizontal ausgerichteten Achse (14) mit dem Vorderbalken (10) montiert ist, wobei der Heckrotor (3) auf dem Hinterbalken (12) angebracht ist, wobei die Maschine (1) eine Arbeitskonfiguration einnehmen kann, in welcher der Hinterbalken (12) sich Nahe des Bodens (S) befindet, und eine Manoeuvrierkonfiguration, in welcher der Hinterbalken (12) weiter vom Boden (S) entfernt ist, Maschine (1) **dadurch gekennzeichnet, dass** ein zentrales Betätigungsmittel (20), das einerseits mit dem Vorderbalken (10) und andererseits mit dem Hinterbalken (12) angelenkt ist, gestattet, eine nach unten gerichtete Kraft auf das Fahrwerk (5) des Frontrotors (2) auszuüben.

2. Maschine nach Anspruch 1, **dadurch gekennzeichnet, dass** das zentrale Betätigungsmittel (20) durch einen Zentralzylinder (18) gebildet ist und, dass der Zentralzylinder (18) angebracht ist, um nur in der Manoeuvrierkonfiguration eine nach unten gerichtete Kraft auf das Fahrwerk (5) des Frontrotors (2) auszuüben.

3. Maschine nach Anspruch 2, **dadurch gekennzeichnet, dass** in Arbeitskonfiguration der Zentralzylinder (18) hydraulisch mit einem Behälter (1) verbunden ist.

4. Maschine nach irgend einem der Ansprüche 1 bis 3, **dadurch gekennzeichnet, dass** ein Mittelgehäuse (19) der Vorderbalken (10) und der Hinterbalken (12) miteinander verbindet, wobei das Mittelgehäuse (19) mit dem Vorderbalken (10) entlang einer der ersten Achse (13) und der zweiten Achse (14) angelenkt ist, und mit dem Hinterbalken (12) entlang der anderen.

5. Heuwerbungsmaschine nach irgend einem der Ansprüche 1 bis 4, **dadurch gekennzeichnet, dass** der Zentralzylinder (18) höher liegt als die zweite Achse (14), und dass der Zentralzylinder (18) eingefahren wird, um eine nach unten gerichtete Kraft auf das Fahrwerk (5) des Frontrotors (2) auszuüben.

6. Heuwerbungsmaschine nach irgend einem der Ansprüche 1 bis 5, **dadurch gekennzeichnet, dass** der Abstand zwischen jedem der Rotoren (2, 3) und dem Boden (S) mittels eines jeweiligen Hubzylinders (54, 64) eingestellt werden kann, und dass die Hubzylinder (54, 64) hydraulisch durch eine gemeinsame Hydraulikleitung (22) verbunden sind, die ebenfalls mit dem Zentralzylinder (18) verbunden ist.

7. Heuwerbungsmaschine nach Anspruch 6, **dadurch gekennzeichnet, dass** ein hydropneumatischer Speicher (25) hydraulisch mit der gemeinsamen Leitung (22) verbunden ist.

8. Heuwerbungsmaschine nach irgend einem der Ansprüche 1 bis 7, **dadurch gekennzeichnet, dass** die erste Achse (13) in einem Abstand, der kleiner as ein viertel des Aussendurchmessers des Frontrotors (2) ist, von der Drehachse (15) des Frontrotors (2) liegt.

9. Umsetzungsmethode für eine gezogene Landwirtschaftsmaschine (1) von einer Arbeitskonfiguration in eine Manoeuvrierkonfiguration, wobei die Maschine ein Frontrotor (2) und ein Heckrotor (3) aufweist, wobei jeder Rotor (2, 3) mit Finger (4) versehen ist, die ein auf dem Boden (S) liegendes Produkt, wie gemähtes Grass, rechen können, wobei jeder Rotor (2, 3) über den Boden (S) mittels eines jeweiligen Fahrwerks (5, 6) rollt, wobei die Maschine (1) ebenfalls eine Deichsel (8) aufweist, die mittels einer Kupplungsvorrichtung (9) an einen Schlepper angekuppelt werden kann, einen Vorderbalken (10) der drehbar entlang einer horizontal ausgerichteten Frontachse (11) mit der Deichsel (8) montiert ist, und an welchem der Frontrotor (2) angebracht ist, einen Hinterbalken (12), der drehbar entlang einer ersten vertikal ausgerichteten Achse (13) und einer zweiten horizontal ausgerichteten Achse (14) mit dem Vorderbalken (10) montiert ist, wobei der Heckrotor (3) auf dem Hinterbalken (12) angebracht ist, wobei die Maschine (1) eine Arbeitskonfiguration einnehmen kann, in welcher der Hinterbalken (12) sich Nahe des Bodens (S) befindet, und eine Manoeuvrierkonfiguration, in welcher der Hinterbalken (12) weiter vom Boden (S) entfernt ist, Methode **dadurch gekennzeichnet, dass** sie darin besteht, Hubzylinder (54, 64) derart zu betätigen, dass sie den Frontrotor (2) und den Heckrotor (3) anheben, und einen Zentralzylinder (18), der einerseits mit dem Vorderbalken (10) und andererseits mit dem Hinterbalken (12) angelenkt ist, derart zu betätigen, dass er eine nach unten gerichtete Kraft auf das Fahrwerk (5) des Frontrotors (2) ausübt.

10. Methode nach Anspruch 9, **dadurch gekennzeichnet, dass** sie darin besteht, die Hubzylinder (54, 64) derart zu betätigen, dass sie den Frontrotor (2) und den Heckrotor (3) anheben, und gleichzeitig den Zentralzylinder (18) derart betätigen, dass er eine nach unten gerichtete Kraft auf das Fahrwerk (5) des Frontrotors (2) ausübt.

## Claims

1. Trailed agricultural machine (1) fitted with a front rotor (2) and a rear rotor (3), each rotor (2, 3) comprising fingers (4) able to rake a product lying on the ground (S) such as cut grass, each rotor (2, 3) rolling over the ground (S) by means of a respective undercarriage (5, 6), the machine (1) being also fitted with a drawbar (8), which can be connected to a tractor by a coupling device (9), a front beam (10) mounted to pivot with the drawbar (8) along a horizontally oriented front axis (11), on which is mounted the front rotor (2), a rear beam (12) mounted to pivot with the front beam (10) along a first vertically oriented axis (13) and a second horizontally oriented axis (14), the rear rotor (3) being mounted on the rear beam (12), the machine (1) being able to occupy a work configuration in which the rear beam (12) is close to the ground (S), and a manoeuvring configuration in which the rear beam (12) is further away from the ground (S), machine (1) **characterized in that** a central actuator (20), articulated to the front beam (10) on one hand and to the rear beam (12) on the other hand, enables a downward force to be exerted on the undercarriage (5) of the front rotor (2).

2. Machine according to claim 1, **characterized in that** the central actuator (20) is made by a central cylinder (18) and **in that** the central cylinder (18) is arranged to exert a downward force on the undercarriage (5) of the front rotor (2) only in the manoeuvring configuration.

3. Machine according to claim 2, **characterized in that** in work configuration, the central cylinder (18) is hydraulically connected to a tank (T).

4. Machine according to any one of claims 1 to 3, **characterized in that** a central housing (19) connects the front beam (10) and the rear beam (12), the central housing (19) being articulated with the front beam (10) according to one of the first axis (13) and the second axis (14) and with the rear beam (12) according to the other.

5. Haymaking machine according to any one of claims 1 to 4, **characterized in that** the central cylinder (18) is located higher than the second axis (14), and **in that** the central cylinder (18) is actuated to withdraw to exert a downward force on the undercarriage (5) of the front rotor (2).

6. Haymaking machine according to any one of claims 1 to 5, **characterized in that** the distance between each of the rotors (2, 3) and the ground (S) can be adjusted by means of a respective lift cylinder (54, 64), and **in that** the lift cylinders (54, 64) are hydraulically connected by a common hydraulic pipe (22), which is also connected to the central cylinder (18).

7. Haymaking machine according to claim 6, **characterized in that** a hydropneumatic accumulator (25) is hydraulically connected to the common pipe (22).

8. Haymaking machine according to any one of claims 1 to 7, **characterized in that** the first axis (13) is at a distance from the axis of rotation (15) of the front rotor (2) which is less than one quarter of the outer diameter of the front rotor (2).

9. Shifting process for a trailed agricultural machine (1) from a work configuration to a manoeuvring configuration, the machine (1) being fitted with a front rotor (2) and a rear rotor (3), each rotor (2, 3) comprising fingers (4) able to rake a product lying on the ground (S) such as cut grass, each rotor (2, 3) rolling over the ground (S) by means of a respective undercarriage (5, 6), the machine (1) being also fitted with a drawbar (8), which can be connected to a tractor by a coupling device (9), a front beam (10) mounted to pivot with the drawbar (8) along a horizontally oriented front axis (11), on which is mounted the front rotor (2), a rear beam (12) mounted to pivot with the front beam(10) along a first vertically oriented axis (13) and a second horizontally oriented axis (14), the rear rotor (3) being mounted on the rear beam (12), the machine (1) being able to occupy a work configuration in which the rear beam (12) is close to the ground (S), and a manoeuvring configuration in which the rear beam (12) is further away from the ground (S), method **characterized in that** it consists in actuating lift cylinders (54, 64) to lift the front rotor (2) and rear rotor (3) and to actuate à central cylinder (18) articulated to the front beam (10) on one hand and to the rear beam (12) on the other hand, so that it exerts a downward force on the undercarriage (5) of the front rotor (2).

10. Process according to claim 9, **characterized in that** it consists in actuating the lift cylinders (54, 64) to lift the front rotor (2) and the rear rotor (3), and simultaneously in actuating the central cylinder (18) so that it exerts a downward force on the undercarriage (5) of the front rotor (2).
